# EUROPEAN PATENT SPECIFICATION

(11) **EP 3 766 748 B1**
(45) Date of publication and mention of the grant of the patent: **09.04.2025**
(21) Application number: 19186556.7
(22) Date of filing: 16.07.2019
(51) Int. Cl.: B60S 13/00, E04H 6/12, B62D 65/18, B25J 5/02, B66F 9/07, B66F 3/08, B66F 3/46

(54) **TRANSPORTATION ARRANGEMENT FOR TRANSPORTATION OF AN OBJECT ON A SURFACE**
TRANSPORTANORDNUNG ZUM TRANSPORT EINES GEGENSTANDES AUF EINER OBERFLÄCHE
AGENCEMENT DE TRANSPORT D'UN OBJET SUR UNE SURFACE

(43) Date of publication of application: 20.01.2021
(60) Divisional application: 24150432.3
(73) Proprietor: Wheel.me AS, 0277 Oslo (NO)
(72) Inventor: Libakken, Rolf, N-2034 Holter (NO)
(74) Representative: Onsagers AS

(56) References cited:
- EP-A1- 3 431 323
- EP-A1- 3 663 486
- WO-A1-2017/207978
- CN-A- 107 444 362
- DE-A1- 102017 217 827
- DE-A1- 102017 221 654
- GB-A- 2 528 987
- JP-A- 2016 216 936
- KR-A- 20100 097 312
- US-A1- 2007 048 118
- US-A1- 2011 029 133
- US-B1- 9 376 132

## Description

### Introduction

The present invention relates to a remotely controlled transportation arrangement for transportation of an object on a surface. The invention further relates to a system which can be attached to a vehicle for moving the vehicle along a surface. The invention is also related to automatically moving a group of transportation units constituting a transportation arrangement.

### Background

There are several instances where there is a need of moving vehicles, such as cars/automobiles, without engaging the vehicle's own propulsion engine. Examples of such situations are during manufacturing of the vehicles, while arranging the vehicles for transportation to retailer or customers, in parking garages, etc.

During manufacturing of cars today, the cars are transported by use of conveyor belts or driven manually by an operator between stations and from completion of the car to the road/rail transport such as trailer, train, boat, etc. Conveyor belts have only one direction of movement and is suitable for transportation along a straight path and is commonly used between manufacturing stations. When the car is approaching the final stages of assembly, the weight and size prohibits easily movement. The need to use the vehicle's own engine, leads in case of fluid fuel vehicles to fire risk due to the presence of fuel.

Similar needs for transportation are present for other objects as well, and it should be noted that the present invention can be used for transportation of a number of objects where a vehicle or a wheel of a vehicle is only one example.

DE 102017217827 describes a device for parking a vehicle. The device comprises a housing and drive wheel and has a pair of short arms, where each arm comprises wheels. The arms are connected to the housing by means of gliding elements.

The object of the invention is to provide a transportation arrangement for versatile transportation of an object on a surface. In the following description, a vehicle is often described as being the object, but as mentioned above, the transportation arrangement can be adapted to a number of different objects. Versatile transportation involves the ability to transport the vehicle in any direction without constraints such as being confined to the direction of a conveyor belt or the vehicles own maneuver ability, and the ability to position the vehicle in a precise manner. An object of the invention is also to provide a vehicle transportation arrangement which enables transportation of a vehicle without engaging the vehicle's internal propulsion engine.

The object of the invention is achieved by means of the features of the patent claims.

### Short description

A transportation arrangement for transportation of a car on a surface comprises four transportation units. The transportation unit comprises a housing comprising a vertical front surface, two arms movably connected to the housing at each side of the vertical front surface, at least one rolling element arranged at a lower portion of the housing, and a power source connected to the rolling elements and the movable arms, where the rolling element are configured to roll in any horizontal direction on the surface.

### Detailed description

The invention will now be described in more detail and by reference to the accompanying figures.
Figure 1 illustrates a front view of an embodiment of a transportation unit for use in a vehicle transportation arrangement.
Figure 2 illustrates a rear view of an embodiment of a transportation unit for use in a vehicle transportation arrangement.
Figure 3 illustrates an embodiment of a transportation arrangement with four transportation units.
Figure 4 illustrates a transportation unit with wireless charging.
Figure 5 and 6 illustrates a transportation unit with detachable power source.
Figure 7 illustrates an embodiment of an arm for use in a transportation unit.
Figure 8-19 illustrate several steps during the movement of an arm of a transportation unit.
Figure 20-24 illustrates a locking mechanism for connecting two or more transportation units together.
Figure 25 illustrates an alternative embodiment of a mechanism for movement of an arm of a transportation unit.

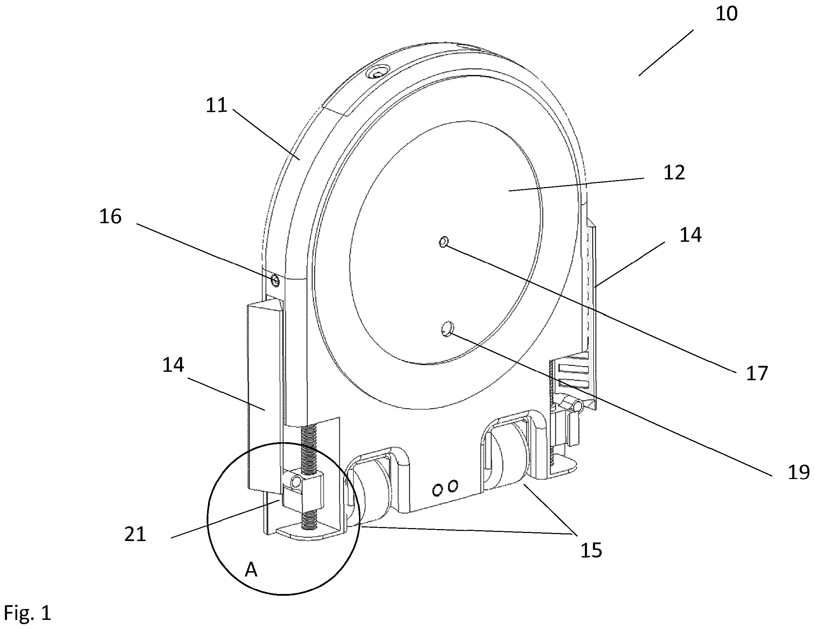

Figure 1 illustrates an embodiment of a transportation unit 10. The transportation unit 10 can be a part of a vehicle transportation arrangement for transportation of an object such as a vehicle on a surface alone or combined with other transportation units. The transportation unit may also be used alone or in combination with other transportation units to transport other objects. The transportation unit 10 comprises a housing 11 having a vertical front surface 12, two arms 14 movably connected to the housing 10 at each side of the vertical front surface, at least one rolling element 15 arranged at a lower portion of the housing, and a power source connected to the rolling elements and the movable arms.

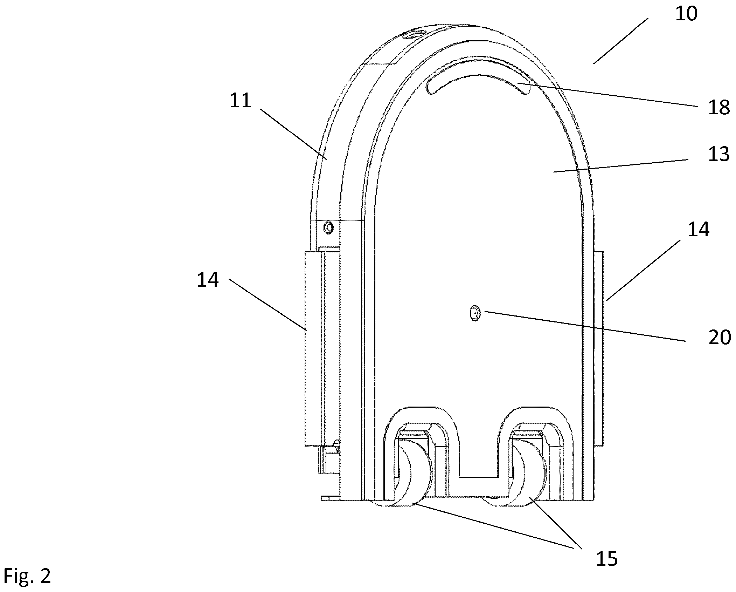

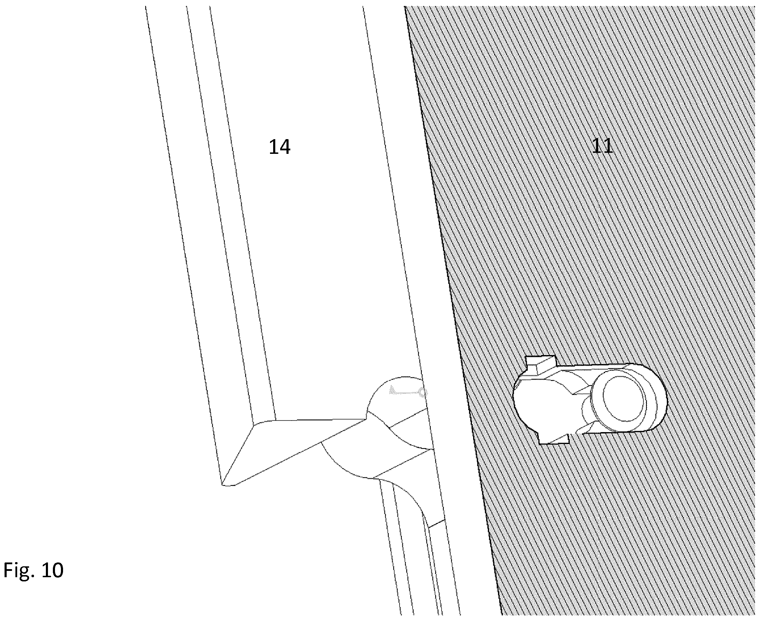

Figure 2 shows the same embodiment as in figure 10, in rear view, showing the back surface 13 of the housing.

In the housing 11 there are incorporated a number of sensors 16, 17, 18. The sensors may for example be ultrasound sensors or other distance sensors, cameras etc. For example, can the front 17 and rear 18 sensors be cameras and the side sensors 16 be ultrasound sensors. The sensors can measure and monitor the distance to nearby objects and obstacles and are used for navigating to the desired position and to combine with other transportation units.

A locking mechanism 19, 20 is arranged in the front and back of the transportation units in form of a locking pin 20 which is adapted to be inserted and locked in a hole 19.

The rolling elements 15 is in this embodiment wheels and can be rotated in order to enable rolling in any horizontal direction on the surface. In this way the transportation unit 10 is very versatile and can navigate precisely from one position to another and position itself precisely with respect to other objects, walls or other obstacles. The rolling elements are connected to a driving unit such as a motor which in turn may be connected to a control unit which controls the driving unit and thereby the rolling elements.

The arms 14 are designed to lift and hold the object to be transported. In the embodiment of figure 1 and 2, the arms are designed to lift a wheel for a car. The arms 14 are thus shaped as longitudinal elements with a triangular cross section. In their resting position, the arms 14 are positioned along each side of the housing 11, parallel to the sides, ie. arranged vertically. When preparing to lift the object to be transported, the arms will be lowered until they are parallel to the surface by rotation at the movable connection 21. The arms are in one embodiment rotated in a direction parallel to the front surface, but can in some embodiments be rotated perpendicular to the front surface. In the case where the arms are rotated parallel to the front surface, they can subsequently be rotated inwards, ie. towards each other to a defined transportation position. In the example of lifting a wheel, the arms are rotated until they are parallel to each other and perpendicular to the front surface. In one embodiment, the arms comprise a sensor which can detect when the arms meet resistance in order to stop the movement at contact. The arms will thus provide a support for the wheel. The arms will then continue with an upwards movement, thus lifting the wheel or other object to be transported.

The transportation arrangement may comprise at least one locking device configured to lock the arm(s) in a predetermined position.

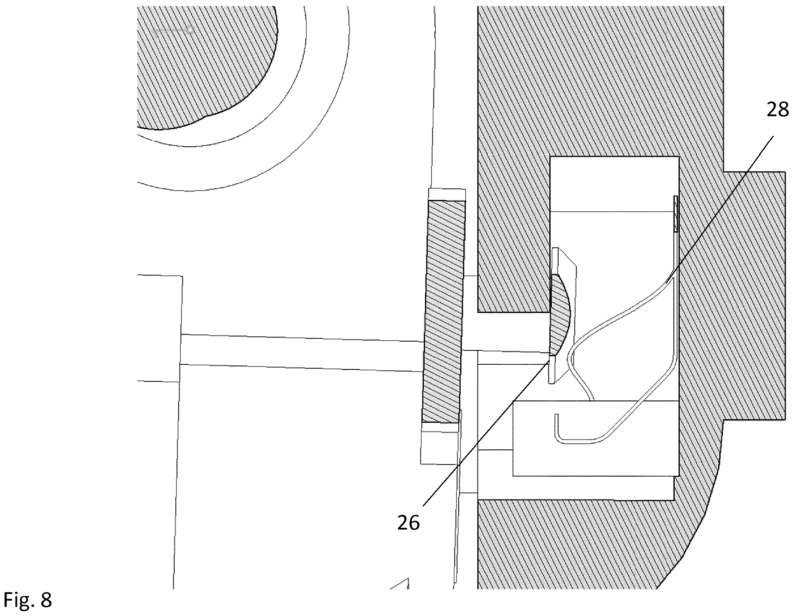

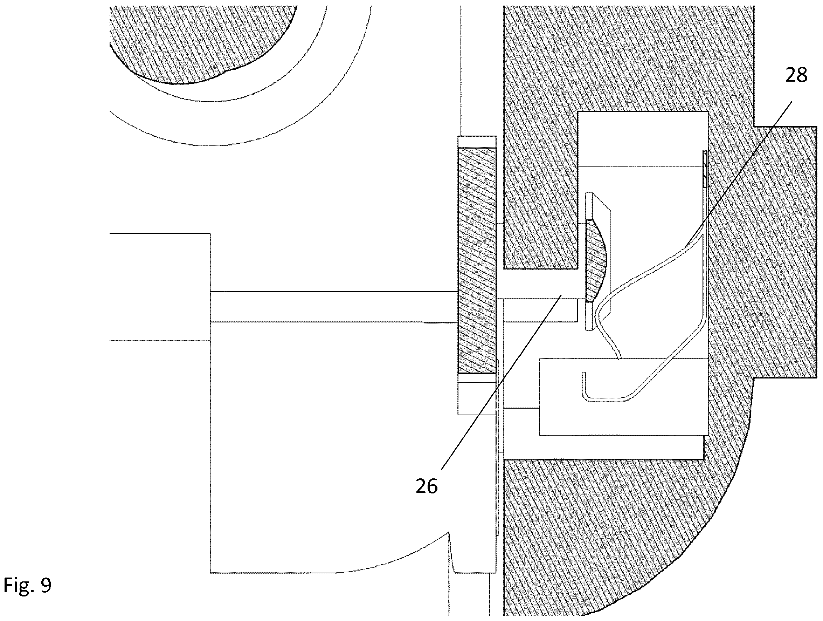

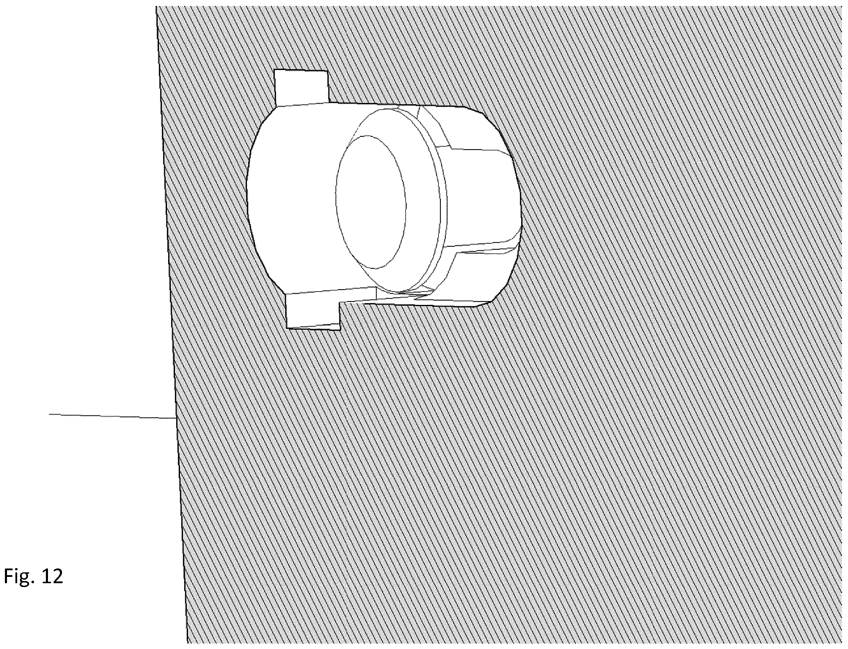

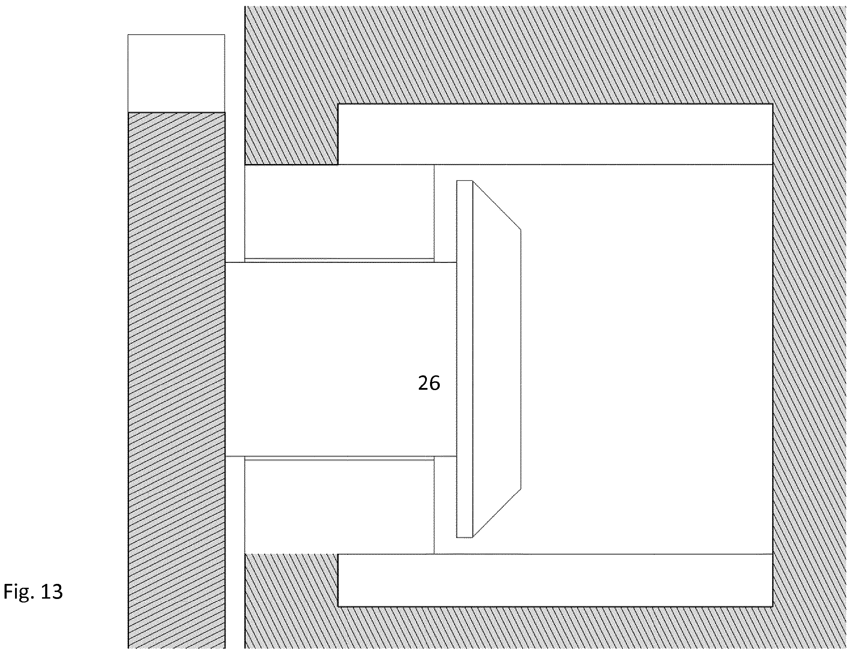

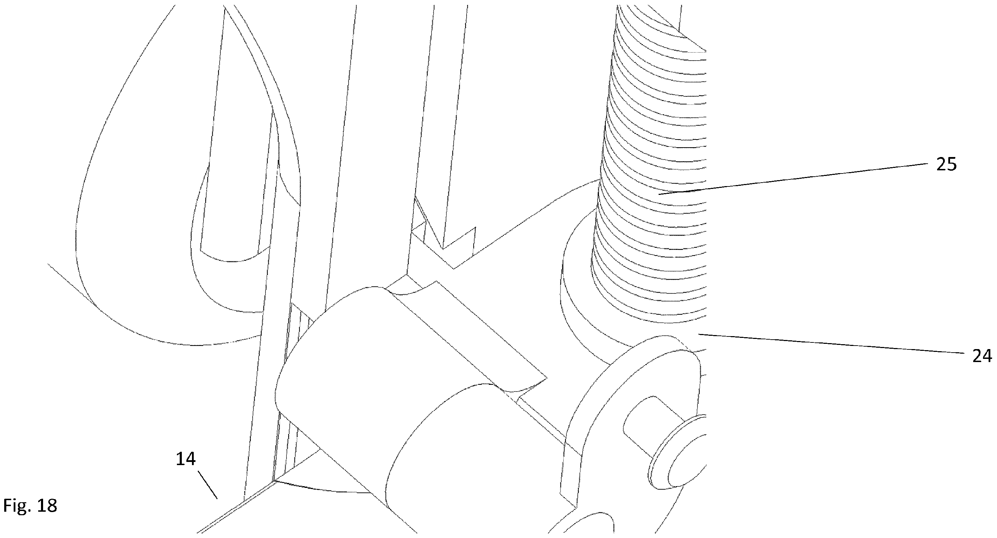

The movable connection 21 of the arms 14 and the locking device are described in more detail in figures 8-19.

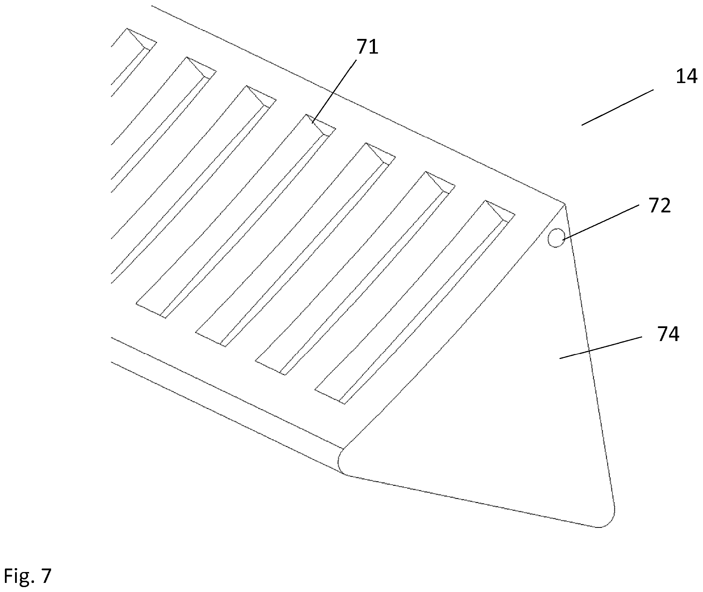

Figure 7 shows a section of one embodiment of an arm 14. The cross section has the same shape as the end face 74, which is triangular, and one of the side faces have grooves 71 to provide friction and thus securing the arm's hold onto the object to be transported. The faces of the arms may also or instead be made of or covered by a friction material. At the end face 74 there is arranged a sensor device or a part of a sensor device 72. In one embodiment a magnet is arranged in 72 which can be detected by a magnet sensor, for example arranged at the housing to detect when the arm is moved to a particular position at the side of the housing.

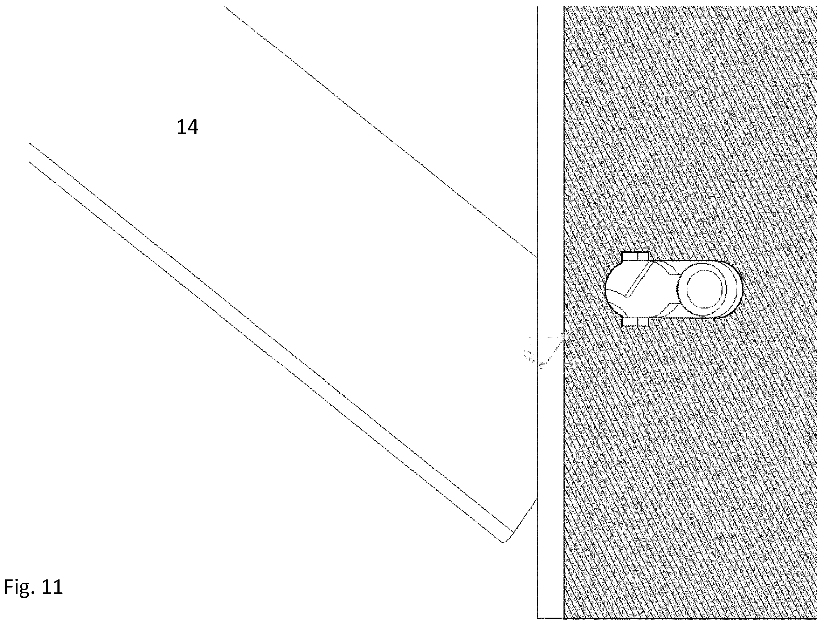

Figure 10 shows a section of an arm 14 in its resting position, ie. arranged alongside the housing 11. The arms 14 are in one embodiment moved from their resting position by first lowering in an outwards direction parallel to the front surface as illustrated in figure 11. When in the resting position, the magnet sensor registers the magnet on the arm, as shown in figure 7.

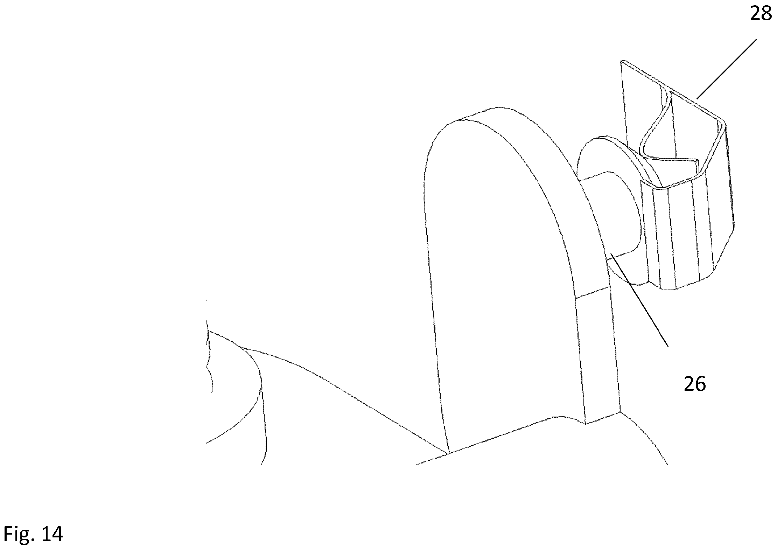

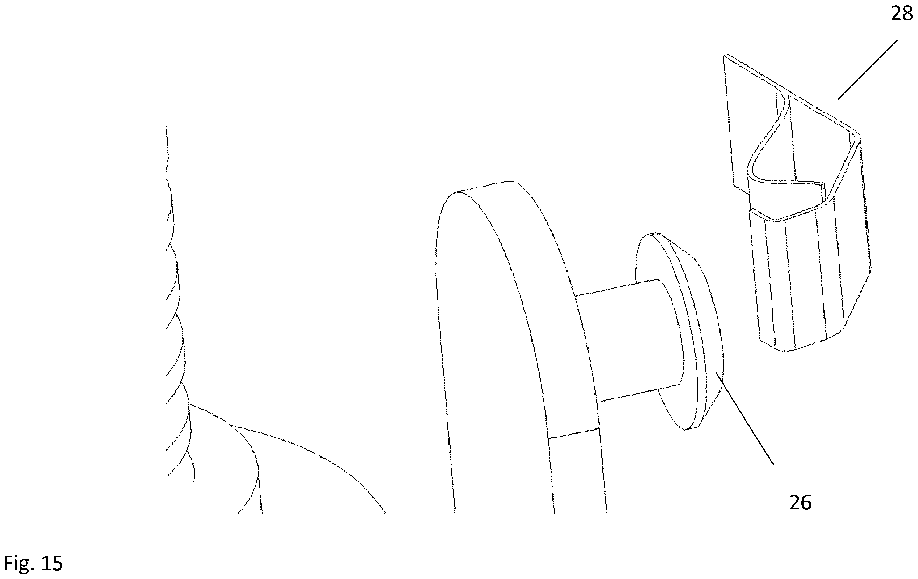

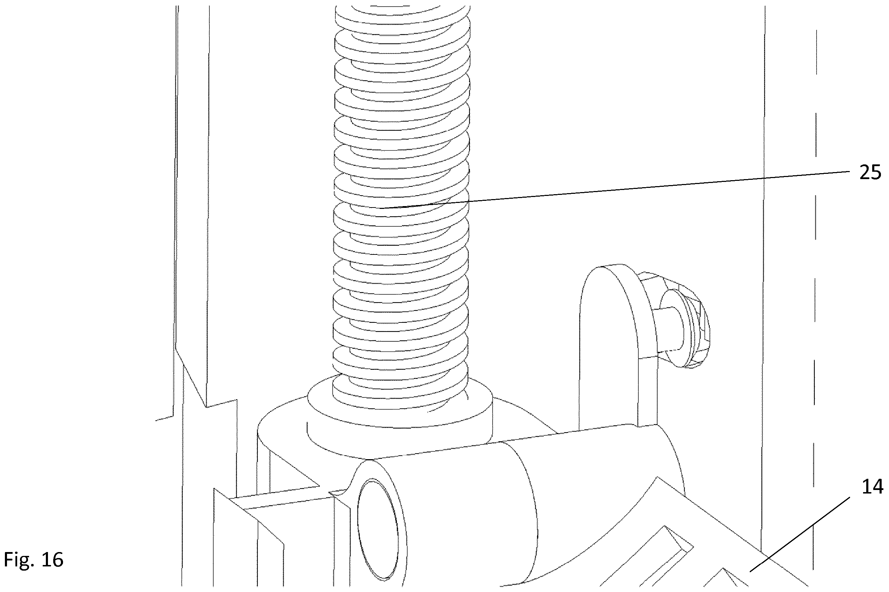

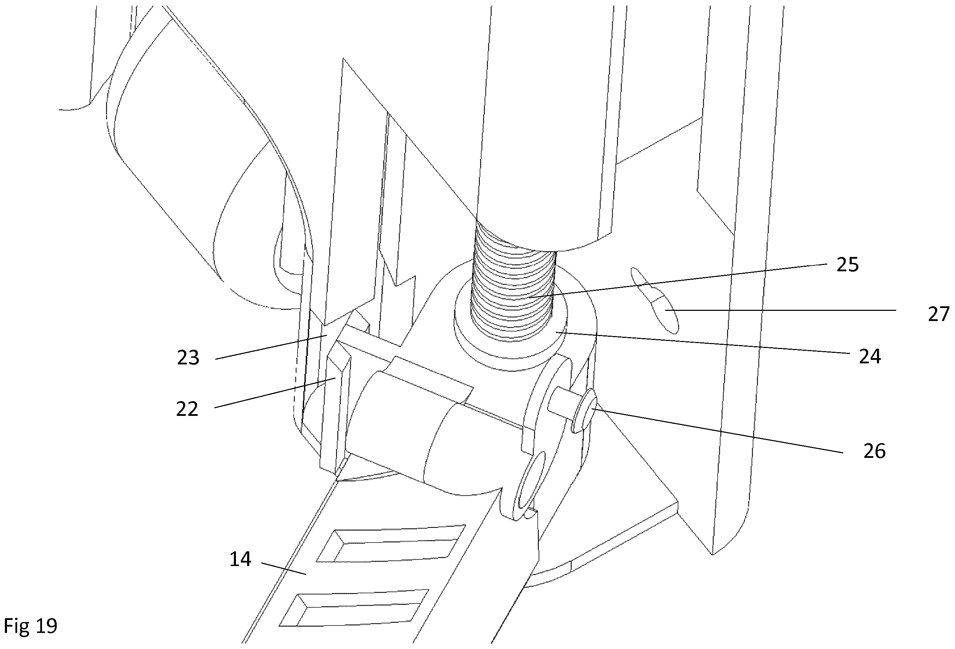

Examples of a mechanism for lifting, rotating and lowering the arms 14 is illustrated in figures 16-19. The arms are in these illustrations lowered to a position mainly parallel to the transport surface. In figure 19, the arm 14 is illustrated during rotation from being parallel to the front surface to perpendicular to the front surface. A locking mechanism 22, 23 will engage when the arm 14 is rotated to its transporting position and will prevent the arms from moving outwards when weight is loaded onto the arms. In this way it is ensured that the arms stay in their transporting position and do not lose the object to be transported. When the arms are in position, they are lifted by further rotating the screw 25. A friction ring 24 causes the arms to first rotate to transporting position before the arms are lifted. When the arm 14 is to be folded up into its resting position again, it is first rotated outwards so that the length of the arm is parallel to the front surface and the ground (the surface on which the object are transported). In this position the peg 26 will engage in the hole 27. The upwards rotation causing the arm to fold upwards, will occur due to the movement of the peg in the hole 27 where it engages a spring. The arm will then be further folded upwards and the to a position parallel to the front surface of the housing in a vertical position, ie. the resting position. An example of the different stages of this process is illustrated in more detail in figures 8-13. Figures 14 and 15 shows examples of a spring 28 which may be arranged in the hole 27 for engaging the peg 26.

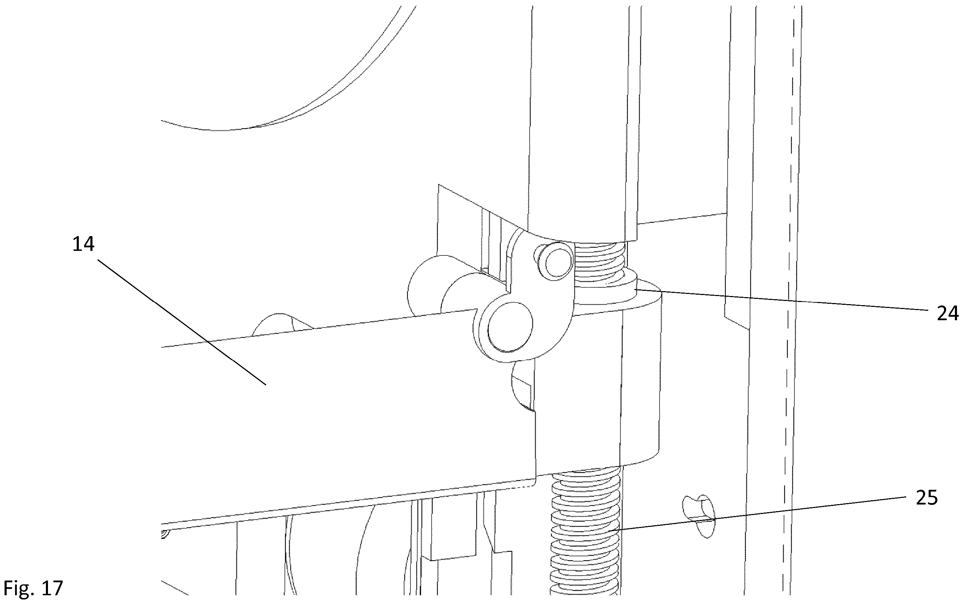

The two screws for rotating and lifting the two arms respectively, are threaded with opposite thread direction. Figure 17 shows the arm 14 in transporting position and having being lifted by rotating screw 25.

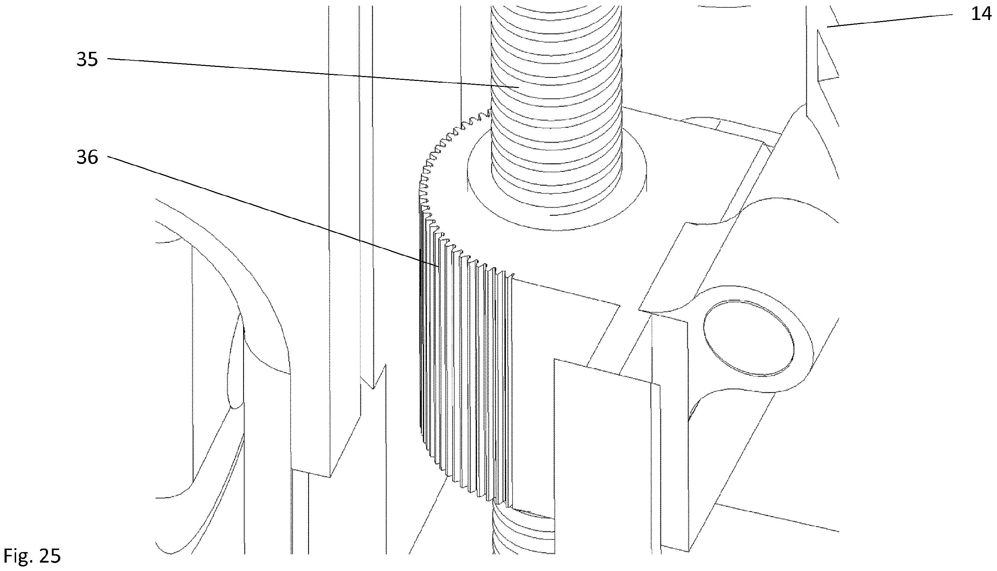

Figure 25 illustrates an alternative embodiment of a mechanism for movement of an arm 14 of a transportation unit. This embodiment comprises a cogwheel 36 which are used for the lateral rotation of the arm 14. The use of a cogwheel 36 eliminates the use of the friction ring 24 in figures 16-19.

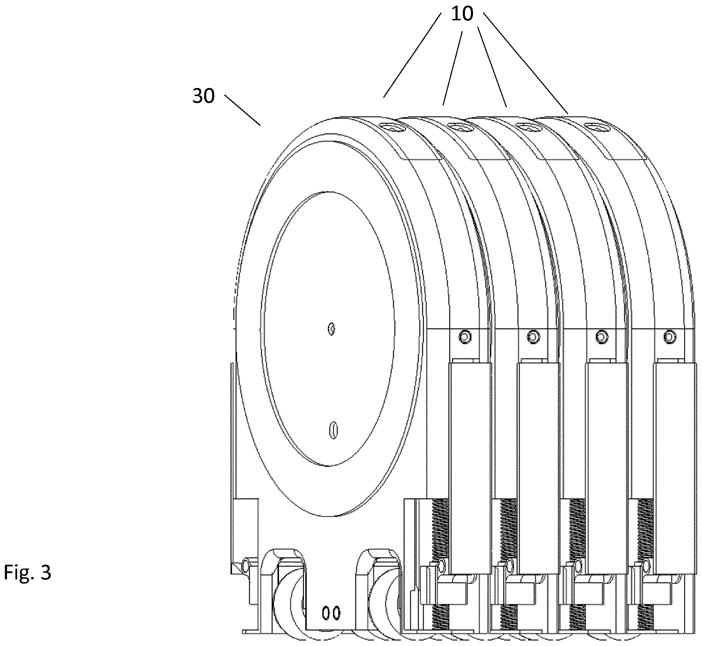

Figure 3 illustrates a transportation arrangement 30 which comprises four transportation units 10. The transportation units are in this example configured to lift and move each wheel of a car.

The transportation units 10 each comprises a vertical back surface configured to contact the vertical front surface of another transportation unit. In this way the transportation units are stacked closely together and may me moved as one unit.

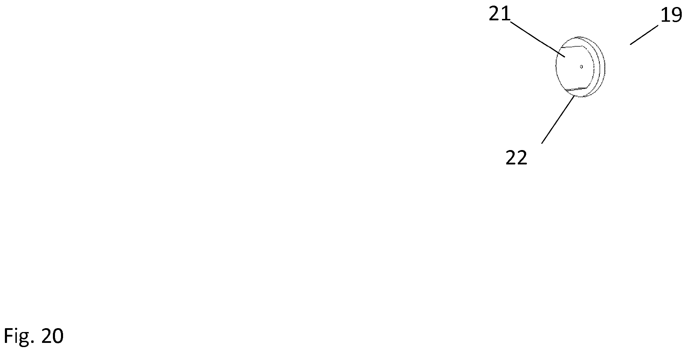

In figure 3, the transportation units are connected together by means of a locking mechanism arranged in each of the transportation units. The locking mechanism is configured to lock the transportation unit to another transportation unit and is exemplified and illustrated in more detail in figures 20-24.

The part of the locking mechanism 19 arranged in the back of the transportation units comprises a locking pin 21 which can be retracted into a hole 22 when not in use and can be extended from the hole when locking is needed. Figure 20 shows the locking pin in its retracted position.

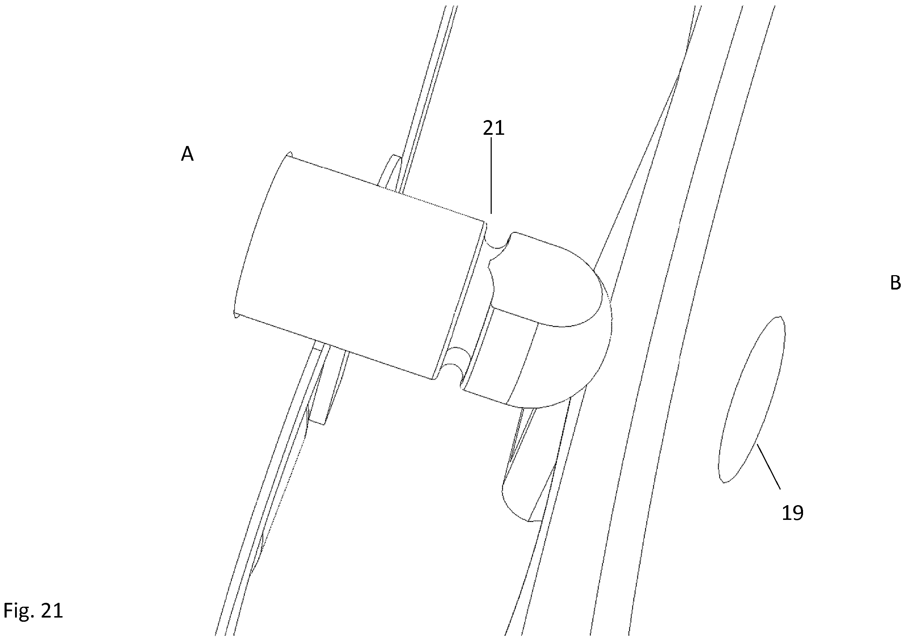

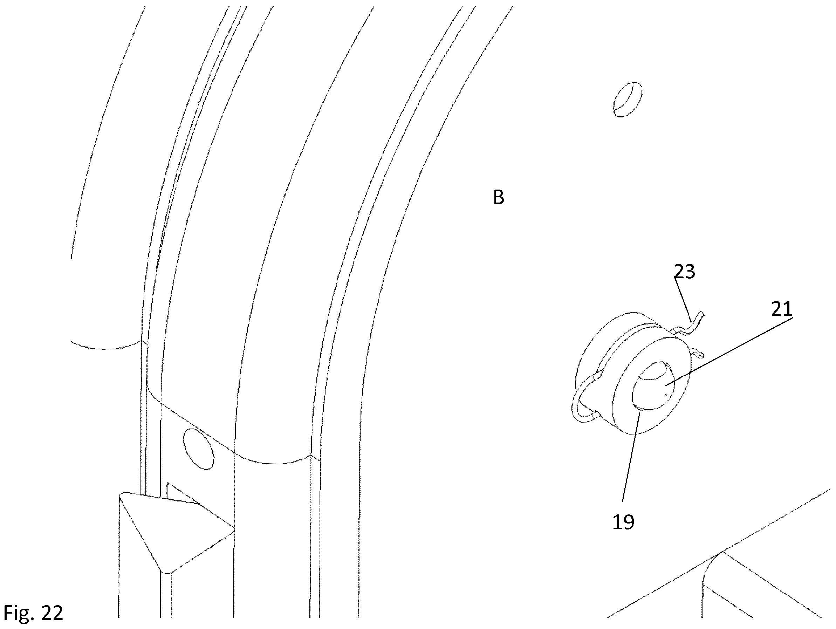

In figure 21 the locking pin 21 of transport unit A is shown in its extended position, ready to be inserted and locked in locking hole 19 of transport unit B. Figure 22 shows the locking pin inserted into locking hole 19. Locking hole 19 comprises a locking spring 23, which will perform the locking function of the locking mechanism. After insertion of the locking pin, the locking pin can be rotated in order to perform the locking. In this example, the locking pin is rotated 90° between the locking position and the unlocked position. The locking pin 21 is in its locking position when two transportation units are locked together and will be rotated 90° in order to release the transportation units from each other.

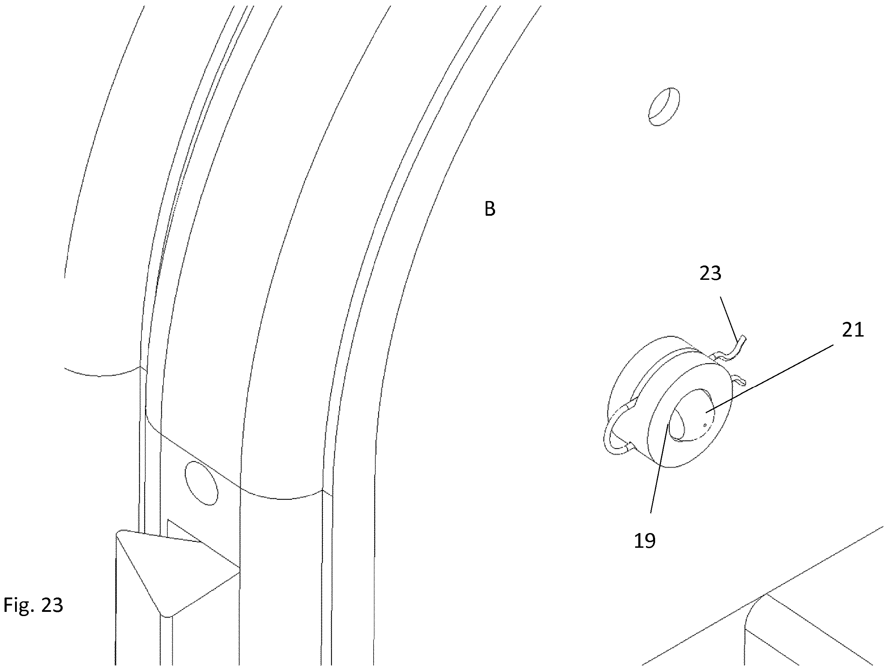

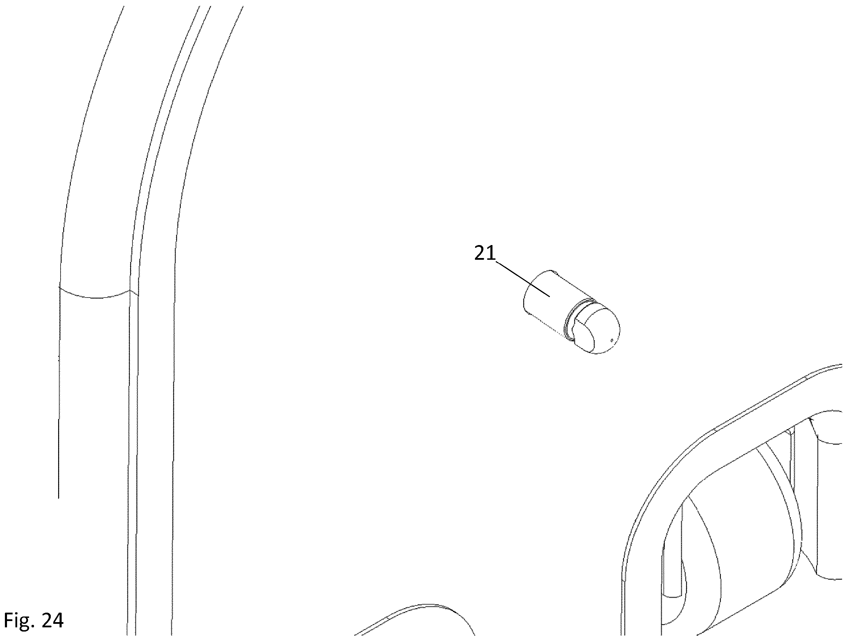

The rotated and locked situation is illustrated in figure 23. Figure 24 shows the locking pin 21 in its locking orientation without being inserted into a locking hole.

In one embodiment, the four transportation units each comprises communication means and are configured to send and receive signals to and from the other transportation units. The communication means may also be able to communicate with remote units such as a remote control system, smart phones or tablets. The communication means are for example wireless transmitters and receivers. The signal may comprise information from the sensors on the transportation units, information regarding the rolling elements such as orientation, momentary rotational speed, status of the power source etc. At least one of the transportation units may comprise a processor device configured to process the signals from the sensors and other information from the transportation units. The transportation units may comprise a control device. One of the transportation units may thus be a master unit, which can send control signals to the other transportation units, which then will function as slave units. When the transportation units are in a transportation arrangement as described, the control signals will direct each of the transportation units to perform its dedicated transport operation. In the example of the transportation arrangement being configured to lift and move each wheel of a car, the transportation units are directed to the wheels and will lift the wheels, and thus the car, in a coordinated manner.

For example, movement instructions are sent to a control device in the transportation units by means of a wireless transmitter. The control device, which is connected to a receiver, may comprise a micro-controller interpreting and acting to a transmitted sequence comprising driving instructions.

When the control device of the transportation unit receives movement instructions, it will determine its position relative to its surroundings. This is current and first position.

When current position is established, movement instruction for controlling the movement of the rolling element is executed in the control device. The movements are based on said first position of the rolling arrangement and the received movement instructions comprising a second position.

Based on this, the transportation unit is moved from the first to the second position.

In one embodiment, a selected transportation unit is set to act as a master unit controlling the movements of the other transportation units. These will then act as slave devices and respond to instructions from the master unit. The master unit will then transmit control signals to the slave devices instructing them it to follow movements according to individual target positions. When several transportation units are to be included in a transportation arrangement that is to be simultaneously and coordinated controlled, each transportation unit is given a unique ID. In this way, all transportation units are able to receive individual movement instructions.

When one transportation unit is acting as a master for the others, it will control each of the other transportation units connected to same device.

When the transportation units are used for other purposes, or acting alone, each transportation unit may still comprise communication means and be remotely controlled.

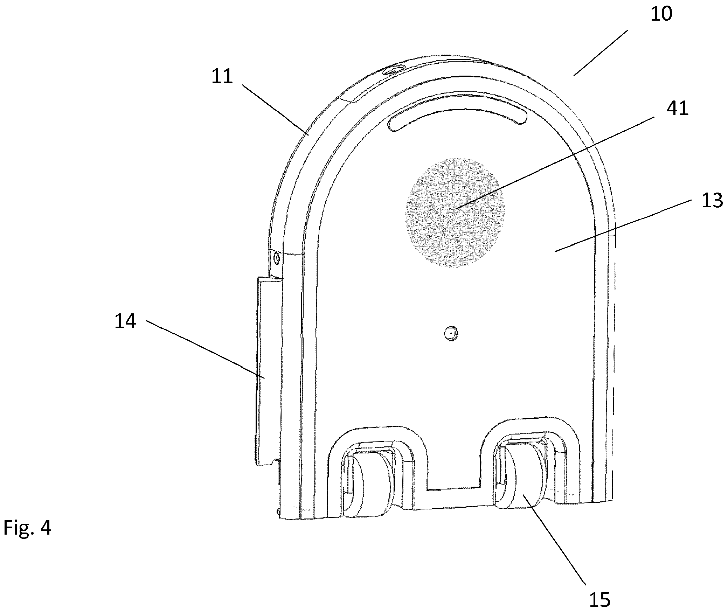

Figure 4 illustrates a transportation unit prepared for wireless charging. The power source is a chargeable battery arranged inside the housing. The circular charging field 41 illustrates the area where the battery is located. The battery can then be charged by placing a wireless charger adjacent to the charging field. The wireless charger can for example be integrated in a wall or a docking station and the transportation unit 10 can roll to the wireless charger when re-charging is needed.

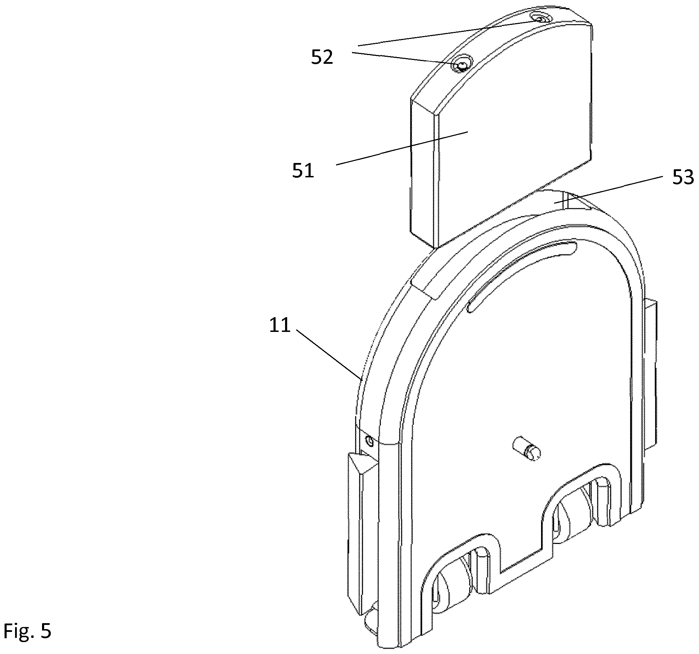

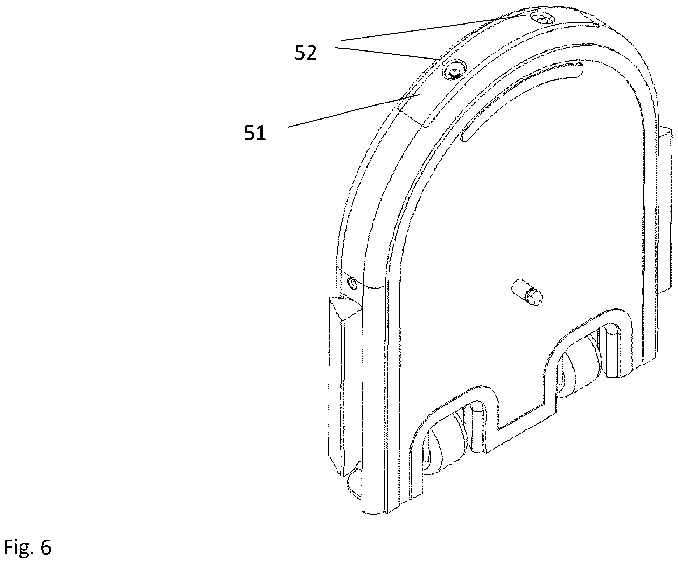

Figure 5 and 6 illustrates a transportation unit where the power source is a removable battery 51. The battery 51 can be inserted into a battery slot 53 in the housing 11 by use of gripping holes 52 and removed when it needs to be charged or replaced. There may also be arranged electric connectors in the gripping holes 52 for connection to electrical power for direct charging of the battery 52.

The transportation unit may be so-called self-balancing. This means that the rolling elements are engaged when the angle of the transportation unit relative the surface on which it will transport any object changes.

In order to achieve self-balancing, the transportation unit comprises a self-balancing control mechanism configured to keep the position of the vertical front surface substantially constant. The self-balancing control mechanism comprises for example a gyroscopic and a sensor. Motors driving the rolling elements automatically engage the gyroscope in the opposite direction of a movement detected by the sensor.

An example of a self-balancing control mechanism is used in hoverboards. The wheels of the hoverboard house the electric motors themselves. They also contain a tilt and speed sensor. The tilt and speed sensors detect the rpm (revolutions per minute) of the individual wheel, and sends it to the gyroscope and speed control boards, located inside the main body, right next to the wheels.

The gyroscope and speed control boards receive the rpms and tilt information from the sensor inside the wheels, and they, in turn, send it to the main logic board.

The tilt sensors in the wheels tell the gyroscopes how far forward you're leaning. The gyroscopes relay this information to the logic board.

The more you're leaning forward, the faster the logic board tells the motors to spin, to sort of "catch up" with your center of gravity.

## Claims

1. Transportation arrangement for transportation of a car on a surface, the transportation arrangement comprising
- a transportation unit (10) comprising
- a housing (11) comprising a vertical front surface,
- two arms movably connected to the housing at each side of the vertical front surface,
- at least one rolling element (12) arranged at a lower portion of the housing, and
- a power source connected to the rolling elements and the movable arms,
where the rolling elements are configured to roll in any horizontal direction on the surface and the arms are configured to lift and hold the wheels of a car,
***characterized in* that**
the transportation arrangement comprises four transportation units, each transportation unit being configured to lift and move each wheel of a car and wherein the arms in a resting position are arranged vertical along each side of the housing, parallel to the sides.

2. Transportation arrangement according claim 1, comprising at least one locking device configured to lock the arm(s) in a predetermined position.

3. Transportation arrangement according to any of the previous claims, where the transportation unit comprises at least one sensor device configured to measure the distance between the transportation unit and surrounding objects.

4. Transportation arrangement according to any of the previous claims, where the at least one transportation unit comprises a self-balancing control mechanism configured to keep the position of the vertical front surface substantially constant.

5. Transportation arrangement according to any of the previous claims, where the power source is a removable battery.

6. Transportation arrangement according to any of the previous claims, where the four transportation units each comprise communication means and are configured to send and receive signals to and from the other transportation units.

7. Transportation arrangement according to any of the previous claims, where the transportation units comprise a vertical back surface configured to contact the vertical front surface of another transportation unit.

8. Transportation arrangement according to any of the previous claims, where the transportation units each comprises a locking mechanism configured to lock the transportation unit to another transportation unit.

## Patentansprüche

1. Transportanordnung zum Transport eines Fahrzeugs auf einer Oberfläche, wobei die Transportvorrichtung umfasst:
- eine Transporteinheit (10), die umfasst:
- ein Gehäuse (11) mit einer vertikalen Vorderfläche,
- zwei Arme, die beweglich mit dem Gehäuse an jeder Seite der vertikalen Vorderfläche verbunden sind,
- mindestens ein Rollelement (12), das im unteren Bereich des Gehäuses angeordnet ist, und
- eine Energiequelle, die mit den Rollelementen und den beweglichen Armen verbunden ist,
wobei die Rollelemente so konfiguriert sind, dass sie in jede horizontale Richtung auf der Oberfläche rollen können, und die Arme so konfiguriert sind, dass sie die Räder eines Fahrzeugs anheben und halten,
***dadurch gekennzeichnet,* dass** die Transportvorrichtung vier Transporteinheiten umfasst, wobei jede Transporteinheit so konfiguriert ist, dass sie jeweils ein Rad eines Fahrzeugs anhebt und bewegt, und wobei die Arme in einer Ruheposition vertikal entlang jeder Seite des Gehäuses parallel zu den Seiten angeordnet sind.

2. Transportanordnung nach Anspruch 1, umfassend mindestens eine Verriegelungsvorrichtung, die konfiguriert ist, um den/die Arm(e) in einer vorbestimmten Position zu verriegeln.

3. Transportanordnung nach einem der vorhergehenden Ansprüche, wobei die Transporteinheit mindestens eine Sensoreinrichtung umfasst, die konfiguriert ist, um den Abstand zwischen der Transporteinheit und umgebenden Objekten zu messen.

4. Transportanordnung nach einem der vorhergehenden Ansprüche, wobei die mindestens eine Transporteinheit einen selbstausgleichenden Steuermechanismus umfasst, der konfiguriert ist, um die Position der vertikalen Vorderfläche im Wesentlichen konstant zu halten.

5. Transportanordnung nach einem der vorhergehenden Ansprüche, wobei die Energiequelle eine austauschbare Batterie ist.

6. Transportanordnung nach einem der vorhergehenden Ansprüche, wobei die vier Transporteinheiten jeweils Kommunikationsmittel umfassen und konfiguriert sind, um Signale an die anderen Transporteinheiten zu senden und von diesen zu empfangen.

7. Transportanordnung nach einem der vorhergehenden Ansprüche, wobei die Transporteinheiten eine vertikale Rückfläche umfassen, die so konfiguriert ist, dass sie mit der vertikalen Vorderfläche einer anderen Transporteinheit in Kontakt steht.

8. Transportanordnung nach einem der vorhergehenden Ansprüche, wobei die Transporteinheiten jeweils einen Verriegelungsmechanismus umfassen, der so konfiguriert ist, um die Transporteinheit an einer anderen Transporteinheit zu verriegeln.

## Revendications

1. Dispositif de transport pour le transport d'une voiture sur une surface, le dispositif de transport comprenant
- une unité de transport (10) comprenant
- un boîtier (11) comprenant une surface avant verticale,
- deux bras reliés de manière mobile au boîtier de chaque côté de la surface avant verticale,
- au moins un élément roulant (12) disposé au niveau d'une partie inférieure du boîtier, et
- une source d'énergie reliée aux éléments roulants et aux bras mobiles,
dans lequel les éléments roulants sont configurés pour rouler dans n'importe quelle direction horizontale sur la surface et les bras sont configurés pour soulever et maintenir les roues d'une voiture,
***caractérisé en ce* que**
le dispositif de transport comprend quatre unités de transport, chaque unité de transport étant configurée pour soulever et déplacer chaque roue d'une voiture et dans lequel les bras en position de repos sont disposés verticalement le long de chaque côté du boîtier, parallèlement aux côtés.

2. Dispositif de transport selon la revendication 1, comprenant au moins un dispositif de verrouillage configuré pour verrouiller le ou les bras dans une position prédéterminée.

3. Dispositif de transport selon l'une quelconque des revendications précédentes, dans lequel l'unité de transport comprend au moins un dispositif de capteur configuré pour mesurer la distance entre l'unité de transport et les objets environnants.

4. Dispositif de transport selon l'une quelconque des revendications précédentes, dans lequel la au moins une unité de transport comprend un mécanisme de commande à équilibrage automatique configuré pour maintenir la position de la surface avant verticale sensiblement constante.

5. Dispositif de transport selon l'une quelconque des revendications précédentes, dans lequel la source d'énergie est une batterie amovible.

6. Dispositif de transport selon l'une quelconque des revendications précédentes, dans lequel les quatre unités de transport comprennent chacune des moyens de communication et sont configurées pour envoyer et recevoir des signaux vers et depuis les autres unités de transport.

7. Dispositif de transport selon l'une quelconque des revendications précédentes, dans lequel les unités de transport comprennent une surface arrière verticale configurée pour entrer en contact avec la surface avant verticale d'une autre unité de transport.

8. Dispositif de transport selon l'une quelconque des revendications précédentes, dans lequel les unités de transport comprennent chacune un mécanisme de verrouillage configuré pour verrouiller l'unité de transport à une autre unité de transport.
